(19) Europäisches Patentamt
European Patent Office
Office européen des brevets

(11) **EP 2 196 886 B1**

(12) **FASCICULE DE BREVET EUROPEEN**

(45) Date de publication et mention
de la délivrance du brevet:
**29.08.2012 Bulletin 2012/35**

(51) Int Cl.:
***G05D 9/12*** *(2006.01)*

(21) Numéro de dépôt: **09178957.8**

(22) Date de dépôt: **11.12.2009**

(54) **Procédé de régulation d'un niveau dans un aménagement hydraulique, système et produit programme d'ordinateur correspondant**

Verfahren zur Niveauregulierung in einer wasserwirtschaftlichen Anlage, sowie entsprechendes System und Computerprogrammprodukt

Method for regulating a water level of a hydraulic channel with corresponding system and computer program product

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.12.2008 FR 0858532**

(43) Date de publication de la demande:
**16.06.2010 Bulletin 2010/24**

(73) Titulaires:
- **Electricité de France**
  **75008 Paris (FR)**
- **Ecole Polytechnique**
  **91120 Palaiseau (FR)**

(72) Inventeurs:
- **Robert, Gérard**
  **73370 Le Bourget du Lac (FR)**
- **Libaux, Antoine**
  **73290 La Motte Servolex (FR)**
- **Fliess, Michel**
  **75010 Paris (FR)**
- **Join, Cédric**
  **54330 Vezelise (FR)**

(74) Mandataire: **Texier, Christian et al**
**Cabinet Regimbeau**
**20, rue de Chazelles**
**75847 Paris Cedex 17 (FR)**

(56) Documents cités:
**WO-A-02/071163      GB-A- 2 187 573**
**US-A- 4 332 507**

- **BURT C M ET AL: "Improved Proportional-Integral (PI) Logic for Canal Automation" JOURNAL OF IRRIGATION AND DRAINAGE ENGINEERING,, vol. 124, 1 janvier 1998 (1998-01-01), pages 53-57, XP009118704 ISSN: 0733-9437**
- **ZHUAN X ET AL: "Models and control methodologies in open water flow dynamics: A survey" 1 septembre 2007 (2007-09-01), AFRICON 2007, IEEE, PI, PAGE(S) 1 - 7 , XP031189601 ISBN: 9781424409860 * le document en entier ***

## Description

La présente invention concerne un procédé de régulation d'un niveau d'eau dans un aménagement hydraulique.
Elle concerne également un système de régulation et un produit programme d'ordinateur correspondants.

ETAT DE L'ART

De nombreux systèmes de régulation de niveau d'eau existent de par le monde.

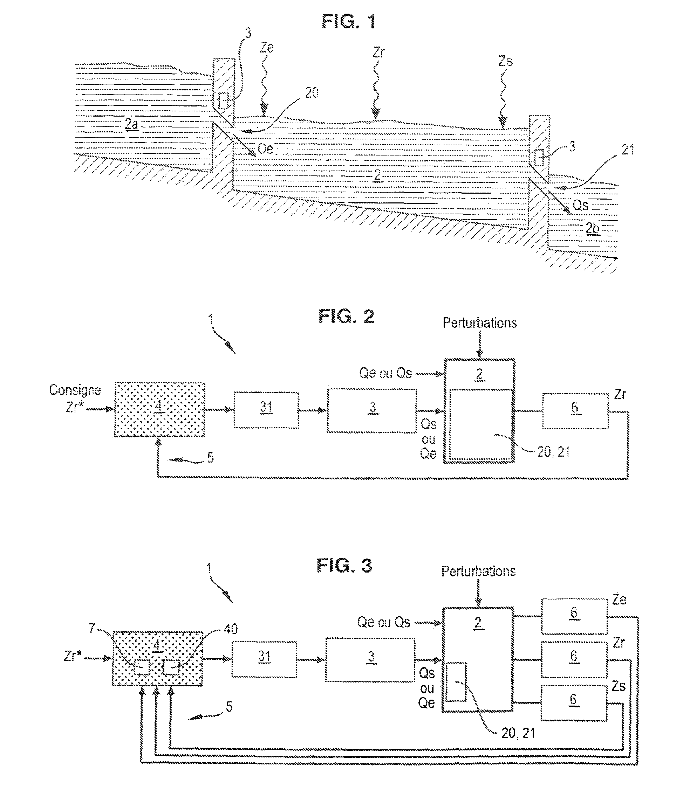

La figure 1 représente schématiquement un aménagement 2 hydraulique régulé, dit à surface libre, et contenant un volume d'eau de géométrie quelconque. L'aménagement 2 peut ainsi être un réservoir, un bassin, un barrage, une retenue, une prise d'eau, une rivière, un canal, un bief...
L'aménagement 2 peut avoir divers usages, qu'il s'agisse de la production d'électricité, de l'entraînement de machines industrielles ou encore d'irrigation pour l'agriculture.
L'aménagement 2 régulé peut être enchaîné avec un aménagement amont 2a et/ou un aménagement aval 2b.
Les systèmes de régulation connus sont très disparates : ils vont des plus simples (pour les réservoirs) aux plus sophistiqués (tout particulièrement pour les biefs, canaux et rivières) en utilisant des techniques avancées de l'Automatique.
Il est difficile de réguler un niveau d'eau d'un aménagement 2 à surface libre de type canal ou rivière.
En effet, un tel aménagement 2 est complexe : grande taille (plusieurs km de long), non-linéaire (le comportement de l'aménagement n'est pas le même suivant le régime de fonctionnement où il se trouve), distribué dans l'espace (régi par les équations aux dérivées partielles d'ordre n de Saint-Venant, qui font intervenir le temps, l'espace et qui induisent des temps de retard variables avec le régime de fonctionnement), multi-variables et soumis à des perturbations aléatoires.
Le problème à résoudre par les concepteurs de systèmes de régulation de niveau est le suivant.
Il s'agit de maintenir à tout instant un niveau d'eau de l'aménagement le plus proche possible d'une consigne de niveau (constante ou variable au cours du temps), fixée par l'opérateur, et ce malgré des perturbations extérieures aléatoires (apports ou prélèvements d'eau qui ne sont pas totalement mesurables).
Comme le montre la figure 2, représentant schématiquement un système 1 de régulation connu, une solution classique consiste à asservir une mesure du niveau Zr par exemple (voir figure 1) à la consigne de niveau Zr*. L'asservissement s'effectue au moyen d'une boucle 5 de régulation numérique passant par un dispositif de commande 4 dans lequel est programmé un procédé de régulation.
Le procédé connu comprend deux fonctions principales de régulation.
La première fonction principale est une fonction de correcteur, qui calcule les ordres de commande à partir de l'écart e entre la mesure Zr du niveau et la consigne de niveau Zr. Les ordres de commande sont amplifiés par un amplificateur 31 avant d'être envoyés à un actionneur 3 d'un organe réglant 20 ou 21, par exemple une vanne.
Les correcteurs connus utilisés dans l'industrie pour cette application sont en général de type : PID (Proportionnelle Intégrale Dérivée) à paramètres constants ou variables en fonction d'une loi non-linéaire, PID généralisé (correcteur de type polynomial), prédicteur de Smith, commande Hinfini (commande linéaire dite robuste basée sur la norme Hinfini), commande optimale (par exemple Linear Quadratic), commande non linéaire ou encore logique floue.
La deuxième fonction principale est une fonction d'anticipation, qui complète les ordres de commande du correcteur en prenant en compte la partie connue des perturbations extérieures.
En outre, pour réguler le niveau d'eau dans un aménagement hydraulique 2, et comme le montre la figure 1, deux principes de commande sont appliqués :

- soit en contrôlant le débit entrant Qe de l'aménagement (on commande ainsi l'organe réglant 20),

- soit en contrôlant le débit sortant Qs de l'aménagement (on commande ainsi l'organe réglant 21).

Comme on le voit sur les figures 1 et 2, dans les deux cas, la commande agit sur l'ouverture d'une vanne ou d'un vannage 20 ou 21 à l'aide d'un actionneur 3 (vérin hydraulique ou moteur électrique).
Les performances généralement demandées à un système de régulation de niveau sont généralement :

- tenue du niveau dans la bande admissible,

- stabilité de la commande,

- maîtrise des variations de débit générées par la commande (contrôle de la vitesse de variation du débit).

- rapidité au suivi de niveau de consigne et au rejet de perturbations.

Historiquement, constat est fait que les systèmes de régulation ont rarement atteint des performances optimales ou alors au prix d'un temps de conception et de mise au point élevés.

Le temps de conception et de mise au point augmente lorsque le cahier des charges exige une robustesse des performances sur toute la plage de fonctionnement, et vis-à-vis des variations des caractéristiques de l'aménagement (temps de retard variables, superficie du réservoir variable en fonction du niveau et de l'envasement, usure de la turbine ou de l'organe 20 ou 21, abaques débit-ouverture incertains...).

Les procédés de commande avancés (basés sur le concept de robustesse) n'ont pas à ce jour permis de résoudre le compromis coût/performance dans un contexte industriel. En effet, ils nécessitent :

- des compétences de haut niveau en Automatique,

- un modèle mathématique représentatif de l'aménagement (avec identification à partir de mesures ou de simulations numériques),

- un réglage d'un nombre élevé de paramètres (supérieur à dix) qui rend les essais de mise en service difficiles et la maintenance délicate (réservée à un spécialiste).

En outre, aucun système industriel connu de régulation n'est capable de réguler un niveau d'eau distant d'un organe réglant (comme une vanne par exemple), de manière complètement automatique (et non semi-manuelle) avec toutes les performances citées précédemment. Le cas d'un niveau distant est en effet complexe, compte-tenu des retards mais également des phénomènes hydrauliques de basculement des plans d'eau, en fonction du débit.

GB 2187 573 A divulgue une commande automatique du niveau d'eau dans les canaux ouverts.

Burt C M et al. « Improved Proportional-Integral (PI) logic for canal automation », Journal of irrigation and drainage engineering, vol. 124, 1 janvier 1998, pages 53-57, XP009118704, divulgue l'utilisation des commandes « Proportionnelle Intégrale » pour l'automatisation des portes des canaux d'irrigation.

WO 02/071153 A concerne la régulation des fluides.

US 4 332 507 A concerne un système de commande du niveau de l'eau pour un réservoir.

Zhuan X et al. « Models and control methodologies in open water flow dynamics : a survey », Africon 2007, IEEE, PI, 1 septembre 2007, pages 1-7, XP031189601, divulgue une revue des modèles des flux d'eau ouverts en Automatique.

PRESENTATION DE L'INVENTION

L'invention propose de pallier à au moins un de ces inconvénients, préférentiellement tous.

A cet effet, on propose selon l'invention un procédé de régulation d'un niveau d'eau positionné en un point quelconque dans un aménagement hydraulique, comportant les étapes consistant à :

- commander, grâce à un dispositif de commande, au moins un actionneur d'un organe réglant de l'aménagement hydraulique, pour la régulation d'un niveau d'eau dans l'aménagement ;
- réguler le niveau dans l'aménagement, grâce à une boucle de retour reliée au dispositif, la régulation comportant les étapes de

  - mesure du niveau dans l'aménagement, grâce à au moins un capteur (6) de mesure appartenant à la boucle ; et
  - comparaison, grâce à au moins un comparateur appartenant au dispositif, entre une consigne de niveau et une mesure de niveau à réguler issue du capteur ;

ledit procédé étant **caractérisé en ce qu**'il comporte une étape consistant à
- calculer, grâce à un correcteur auto-adaptatif du dispositif de commande, à chaque pas $T_e$ de temps d'échantillonnage, un signal u(t) de commande de l'actionneur, tel que :

$$u(t + T_e) = \frac{1}{\alpha}\left(\frac{dZ^*}{dt} - F\right)(t) + PI(e) \quad (1)$$

avec :

$Z^*(t)$ la consigne de niveau ;

$F$ une variable, mise à jour à chaque pas de temps $T_e$, et représentant une structure mal connue d'un modèle complet de l'aménagement hydraulique ;

$\alpha$ est un coefficient constant tel que $F$ et $\alpha.u$ sont du même ordre de grandeur ;

$$PI(e) = K_p.e + K_i.\int e.dt$$

avec $e = Z(t) - Z^*(t)$, avec $Z(t)$ la mesure du niveau à réguler au cours du temps, issue du capteur et $Kp$ et $Ki$ des gains constants.

L'invention est avantageusement complétée par les caractéristiques suivantes, prises seules ou en une quelconque de leur combinaison techniquement possible :

- le procédé comporte une étape d'estimation de la dérivée de la mesure de niveau à réguler par un filtrage, grâce à un filtre du dispositif relié au correcteur auto-adaptatif, de sorte que le correcteur auto-adaptatif calcule la variable $F$, mise à jour à chaque pas de temps $T_e$, selon la formule : où

$$F(t) = Est\left(\frac{dZ(t)}{dt}\right) - \alpha.u(t)$$

$$Est\left(\frac{dZ(t)}{dt}\right) = Filtre\left(\frac{Z(t) - Z(t-T_e)}{T_e}\right) ;$$

- il comporte une étape de filtrage d'anticipation, grâce à un filtre d'anticipation, par exemple au premier ordre, le filtre prenant en compte un retard égal au temps de propagation estimé entre une mesure de niveau d'entrée et une mesure de niveau de sortie de l'aménagement ;
- il comporte une étape de limitation, grâce à un limiteur, le limiteur limitant le signal de commande de sorte que
- l'amplitude d'un débit Qs sortant de l'aménagement entre deux bornes $Qsmin$ et $Qsmax$ soit telle que :

$$Qs\min \leq Qs \leq Qs\max$$

et/ou
- la vitesse de variation du débit Qs sortant à une vitesse $Vmax$ maximale soit telle que :

$$-V\max \leq \frac{dQs}{dt} \leq V\max \quad ;$$

- il comporte une étape de régulation indirecte d'un niveau qui est distant de l'organe réglant, en calculant, grâce au correcteur auto-adaptatif, un signal de commande $u(t)$ pour la régulation d'un niveau proche tel que :

$$u(t + T_e) = \frac{1}{\alpha}\left(\frac{dZs^*}{dt} - F\right)(t) + PI(e)$$

avec : $Zs(t)$ un niveau proche à réguler au cours du temps pour réguler indirectement le niveau Zr(t) distant ;
$Zs^*(t)$ la consigne de niveau calculée, issue d'une boucle telle que

$$Zs^*(t) = Zf^* + PI(e_r)$$

avec $Z_f^\bullet = \left(Z_r^\bullet - c_e.Z_e\right)/c$ où c et c$_e$ sont des facteurs de forme prenant en compte les positions respectives d'une part d'un niveau distant Zr à réguler et d'autre part d'une mesure Ze d'un niveau d'entrée dans l'aménagement ;

$$PI(e_r) = K_{pr}.e_r + K_{ir}.\int e_r.dt$$

où $e_r = Zr\bullet*(t) - Zr(t)$ et

*Kpr* et *Kir* des gains constants.

L'invention concerne également un système et un produit programme d'ordinateur de mise en oeuvre du procédé.

L'invention présente de nombreux avantages.

Le dispositif de commande met en oeuvre une commande appelée sans modèle par l'homme du métier qui, par ses propriétés de robustesse, d'adaptabilité et de simplicité, apporte des performances remarquables non égalées par les dispositifs connus, dans un temps de mise au point très court, adapté au milieu industriel. L'invention permet donc la maîtrise du temps passé au réglage optimal des paramètres pour la mise en oeuvre du procédé de régulation, que ce soit en étude de simulation, ou sur site.

L'invention présente l'avantage de ne pas nécessiter la connaissance d'un modèle mathématique de l'aménagement, d'où un gain encore accru de temps pour la conception du système de régulation (il n'y a plus besoin d'identifier les paramètres du modèle).

Seuls trois paramètres (Kp, Ki, α) du procédé de régulation sont à régler pour toute la plage de fonctionnement, sans compétence particulière. Pour les aménagements en cascade, le même jeu de paramètres (Kp, Ki) pourra être utilisé sur tous les aménagements de la chaîne.

L'invention s'applique à tout aménagement hydraulique, qu'il soit isolé ou enchaîné à d'autres aménagements en cascade, comme représenté en figure 1.

L'invention peut être mise en oeuvre sur les systèmes déjà existant avec très peu d'adaptations, grâce au produit programme d'ordinateur selon l'invention, qui, une fois chargé sur le système adapté, permet la mise en oeuvre d'un procédé selon l'invention.

Le système de régulation selon l'invention, peut être implanté localement, au niveau de certains organes réglants (régulation décentralisée).

Les performances obtenues par le système de régulation sont garanties sur toute la plage de fonctionnement en :

- maîtrise des niveaux d'eau,

- suivi de la consigne de niveau (pouvant évoluer dans le temps),

- rejet des perturbations extérieures de toute nature,

- maîtrise des variations de débit générées par la commande.

L'invention permet de réguler non seulement un niveau proche, mais également et surtout un niveau distant de l'organe réglant.

L'invention permet également un découplage entre la régulation et la poursuite : la poursuite est choisie par l'ingénieur (overshoot / undershoot, temps d'établissement) afin de satisfaire les spécifications en boucle fermée.

La charge du correcteur auto-adaptatif est minime (traitements simples et nombre d'opérations faible).

La maintenance est également facilitée.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente schématiquement un aménagement hydraulique à réguler, enchaîné avec un aménagement amont et un aménagement aval ;
- la figure 2, déjà commentée également, représente schématiquement un mode de réalisation d'un système connu de régulation ;

- la figure 3 représente schématiquement un principe d'un mode de réalisation possible d'un système selon l'invention ;
- les figures 4 représentent schématiquement un premier mode de réalisation possible d'un système selon l'invention ;
- les figures 5 représentent schématiquement un deuxième mode de réalisation possible d'un système selon l'invention ;
- la figure 6 représente schématiquement les étapes principales d'un procédé selon l'invention ;
- la figure 7 représente schématiquement un mode manuel de commande.

Sur l'ensemble des figures, les éléments similaires portent des références numériques identiques.

DESCRIPTION DETAILLEE

La figure 3, en combinaison avec la figure 1, représente schématiquement un principe d'un mode de réalisation possible d'un système 1 de régulation d'un niveau Ze, Zr, ou Zs d'eau dans un aménagement 2 hydraulique, selon l'invention.

Ze correspond au niveau d'eau en entrée de l'aménagement 2, Zs correspond au niveau d'eau en sortie de l'aménagement 2, et Zr correspond au niveau d'eau entre l'entrée et la sortie de l'aménagement 2.

Le système 1 de régulation comporte principalement un dispositif 4 de commande d'au moins un actionneur 3 d'un organe réglant 20 ou 21 de l'aménagement 2 pour la régulation du niveau Ze, Zr, ou Zs d'eau dans l'aménagement 2.

L'actionneur 3 est du type vérin hydraulique ou moteur électrique.

L'organe réglant est par exemple une vanne en entrée 20 ou une vanne 21 en sortie de l'aménagement.

Un amplificateur 31 permet d'amplifier le signal de commande en sortie du dispositif 4 de commande pour son envoi dans l'actionneur 3.

Le système 1 comporte également une boucle 5 de retour, comportant principalement au moins un capteur 6 de mesure de niveau dans l'aménagement 2, et reliée au dispositif 4.

Le dispositif 4 comporte également au moins un comparateur 7 entre une consigne de niveau $Z^*(t)$ de (Ze*, Zr*, ou Zs*) et une mesure $Z(t)$ (Ze, Zr, ou Zs) de niveau issue du capteur 6.

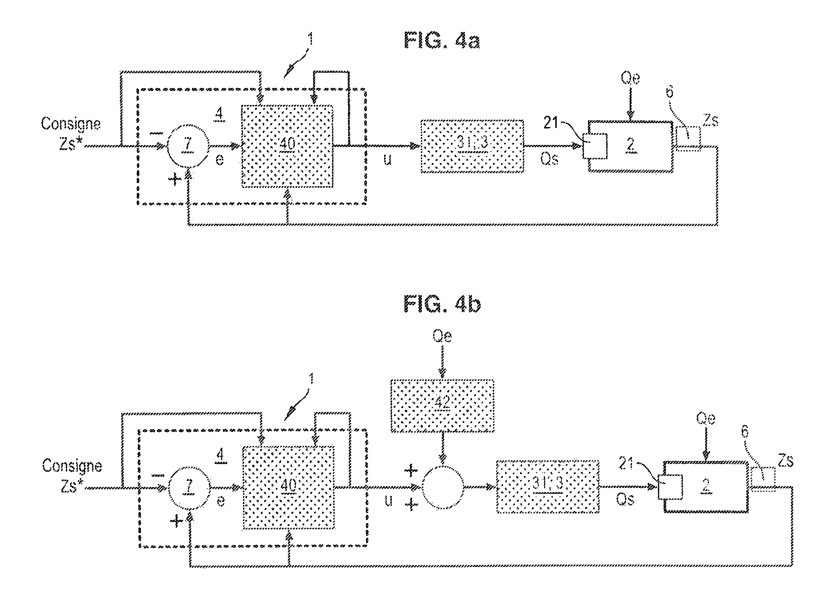

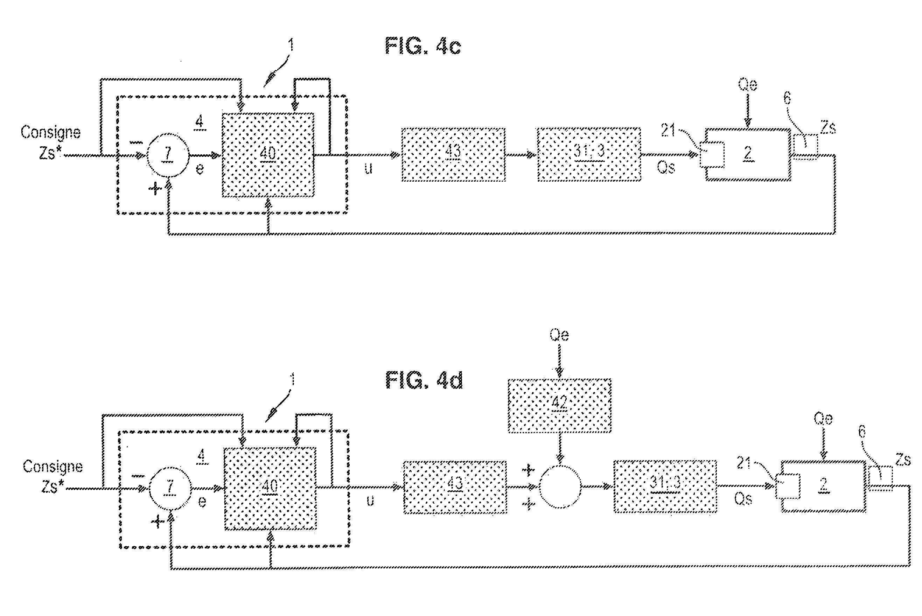

Le dispositif 4 de commande comporte un correcteur auto-adaptatif 40 apte à calculer, à chaque pas $T_e$ de temps d'échantillonnage notamment de la mesure Z(t), un signal u(t) de commande de l'actionneur 3, selon une commande sans modèle décrite plus en détail dans la suite de la présente description, en référence aux figures 4 concernant un premier mode de réalisation possible.

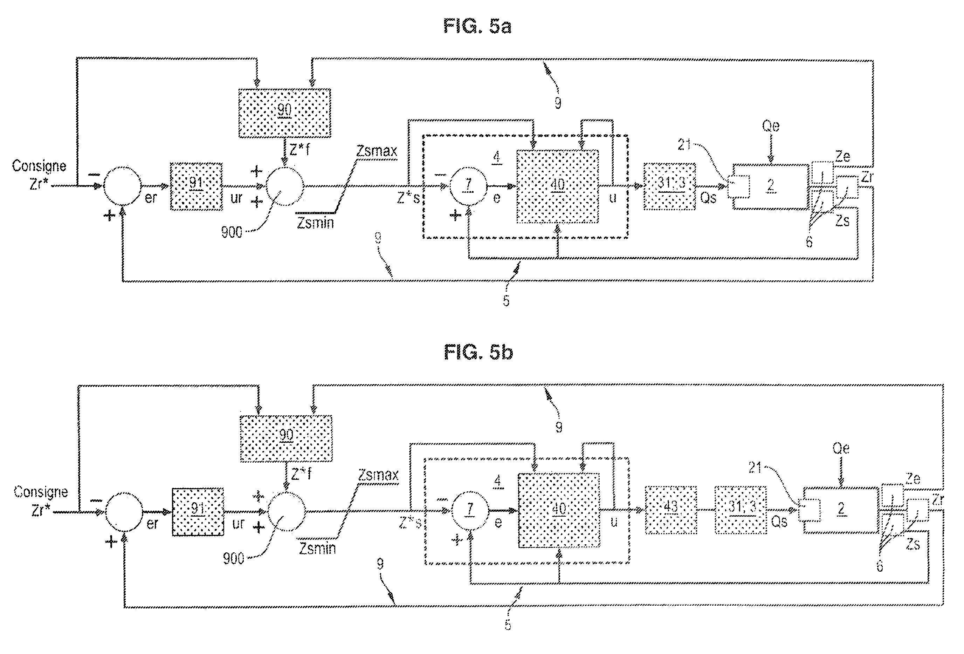

Les développements qui suivent concernent des régulations de niveau par commande du débit sortant Qs (voir figure 1 notamment). On comprend qu'ils sont facilement transposables pour une commande du débit entrant Qe, en remplaçant Qs par Qe et Qe par Qs dans les figures 4a, 4b, 4c, 4d et 5a, 5b et 5c par exemple.

REGULATION D'UN NIVEAU PROCHE DE L'ORGANE REGLANT

On décrit ici, en référence aux figures 4, et notamment à la figure 4a, un premier mode de réalisation possible d'un système selon l'invention, s'appliquant avantageusement à la commande d'un organe réglant 21 pour réguler par exemple le niveau Zs, qui est situé à proximité de l'organe 21. Dans ces conditions, le niveau Zs réagit sans retard à un ordre de commande. La régulation s'effectue au moyen d'une boucle 5 interne de régulation.

Le principe de l'invention repose sur un modèle local du système hydraulique, recalculé à chaque pas de temps de période d'échantillonnage $T_e$. En d'autres termes, il n'est pas nécessaire d'avoir un modèle physique complet de l'aménagement 2.

On évite donc une modélisation aussi complète que possible, et toujours délicate à obtenir, en prenant comme modèle local de l'aménagement 2 l'équation différentielle d'ordre n :

$$\left(\frac{dZ}{dt}\right)^n = F + \alpha.u$$

où u(t) et Z(t) sont respectivement un signal de commande pour l'organe réglant (agissant sur le débit sortant Qs dans le cas des figures 4) et une mesure du niveau (niveau Zs à réguler dans le cas des figures 4), évoluant au cours du temps ;

F une variable qui représente la structure mal connue du modèle complet : c'est une variable mise à jour à chaque pas de temps Te ;

$\alpha$ est un coefficient constant, déterminé de sorte que F et $\alpha$.u soient approximativement du même ordre de grandeur.

Les modèles connus des canaux sont basés sur des équations aux dérivées partielles (équations de Saint Venant) qui suggèrent intuitivement de prendre une valeur de n élevée.

Les inventeurs ont cependant constaté que, pour une application industrielle aux aménagements hydrauliques, le choix de n = 1 est suffisant et même avantageux, car il permet en outre de réduire le nombre d'opérations effectuées par le système de régulation.

Avantageusement, le correcteur auto-adaptatif 40 calcule la variable $F$, mise à jour à chaque pas de temps $T_e$, selon la formule :

$$F(t) = Est\left(\frac{dZ(t)}{dt}\right) - \alpha.u(t)$$

où

$$Est\left(\frac{dZ(t)}{dt}\right) = Filtre\left(\frac{Z(t) - Z(t - T_e)}{T_e}\right),$$

à savoir une estimation de la dérivée temporelle de la mesure du niveau à réguler.

L'estimation ainsi proposée simplifie grandement les calculs, et permet d'obtenir une bonne estimation de la valeur numérique de F à chaque instant Te, malgré la période d'échantillonnage élevée (de l'ordre de la minute), ce qui est le cas dans les aménagements hydrauliques.

On en déduit le signal de commande u(t), issue du dispositif 4 -- que l'homme du métier appelle aussi correcteur Proportionnel-Intégral (PI) *intelligent* -- , par :

$$u(t + T_e) = \frac{1}{\alpha}\left(\frac{dZ^*}{dt} - F\right)(t) + PI(e) \quad (1)$$

où $PI(e) = K_p.e + K_i.\int e.dt$ avec $e = Z(t) - Z^*(t)$.

Les gains $Kp$ et $Ki$ sont ceux habituels pour ce type de correcteur. On se ramène ainsi au réglage d'un intégrateur simple dans le dispositif 4. Le réglage de l'intégrateur du dispositif 4 est particulièrement facile et d'une extrême robustesse, puisqu'insensible aux variations de modèles.

Le signal de commande u calculé peut également subir un filtrage.

Comme le montre la figure 4b, le système 1 peut comporter un filtre 42 d'anticipation, ayant en entrée le débit d'entrée Qe, et dont la sortie est additionnée au signal de commande u(t) via un additionneur 420.

Le filtre 42 d'anticipation est apte à prendre en compte un retard égal au temps de propagation estimé entre une mesure Ze de niveau d'entrée de l'aménagement et une mesure Zs de niveau de sortie, à réguler.

Le filtre 42 est par exemple du premier ordre.

Comme le montre la figure 4c, le système 1 peut comporter un limiteur 43 apte à limiter le signal de commande de sorte que l'amplitude du débit Qs sortant de l'aménagement 2 entre deux bornes $Qsmin$ et $Qsmax$ soit telle que :

$$Qs\min \leq Qs \leq Qs\max$$

Le limiteur 43 peut également être apte à limiter la vitesse de variation du débit Qs sortant à une vitesse $Vmax$ maximale telle que :

$$-V\max \leq \frac{dQs}{dt} \leq V\max$$
.

La figure 4d montre un mode de réalisation comportant à la fois un limiteur 43 et un filtre d'anticipation 42.

REGULATION D'UN NIVEAU DISTANT DE L'ORGANE REGLANT

On décrit ici, en référence à la figure 5, un deuxième mode de réalisation d'un système selon l'invention s'appliquant avantageusement à la commande d'un organe réglant 21, pour réguler le niveau Zr qui est situé à distance de l'organe 21. Dans ces conditions, le niveau Zr réagit avec retard à un ordre de commande. Comme on le constate sur la figure 5, la régulation s'effectue au moyen de deux boucles 5 et 9 de régulation en cascade.

Ainsi, comme le montrent les figures 5, et notamment la figure 5a, le système comporte une boucle 9 de retour à partir de l'aménagement 2 et reliée au dispositif 4.

La boucle 9 comporte un module 90 d'anticipation apte à calculer la variable $Zf^*$ telle que

$$Z_f^* = \left( Z_r^* - c_e . Z_e \right)/c$$

où $c$ et $c_e$ sont des facteurs de forme prenant en compte les positions respectives d'une part d'un niveau distant Zr à réguler et d'autre part d'une mesure Ze d'un niveau d'entrée dans l'aménagement.

On a par exemple, $c = c_e = 0,5$ si le capteur mesurant Zr est au milieu du canal (ou encore $c = 1/3$ et $c_e = 2/3$ au prorata des distances entre les positions de Ze, Zr et Zs).

Le système comporte également un module 91 de correction, réalisant une fonction classique de correcteur Proportionnel Intégral, apte à corriger l'erreur ertelle que

$$ur = PI(e_r) = K_{pr}.e_r + K_{ir}.\int e_r.dt$$

où $e_r = Z_r^*(t) - Zr(t)$ et
$Kpr$ et $Kirdes$ gains constants.

Le signal $Zf^*$ est additionné au signal $PI(e_r)$ via l'intermédiaire d'un additionneur 900,

$$Zs^*(t) = Zf^* + PI(e_r) \quad (2)$$

pour former une consigne Zs* dans l'équation (1) prise en compte par le correcteur auto-adaptatif 40 pour le calcul de la commande u(t), à savoir

$$u(t + T_e) = \frac{1}{\alpha}\left( \frac{dZs^*}{dt} - F \right)(t) + PI(e).$$

La consigne Zs* est avantageusement limitée dans la plage [Zsmin , Zsmax], pour éviter les trop gros écarts d'amplitude dans les niveaux.

Comme le montre la figure 5b, le système peut comporter, comme pour le premier mode de réalisation, un limiteur 43 apte à limiter l'amplitude du débit Qs sortant de l'aménagement 2 entre deux bornes $Qsmin$ et $Qsmax$ telles que :

$$Qs\min \le Qs \le Qs\max$$

Le limiteur 43 peut également être apte à limiter la vitesse de variation du débit Qs sortant à une vitesse $Vmax$ maximale telle que :

$$-V\max \leq \frac{dQs}{dt} \leq V\max$$
.

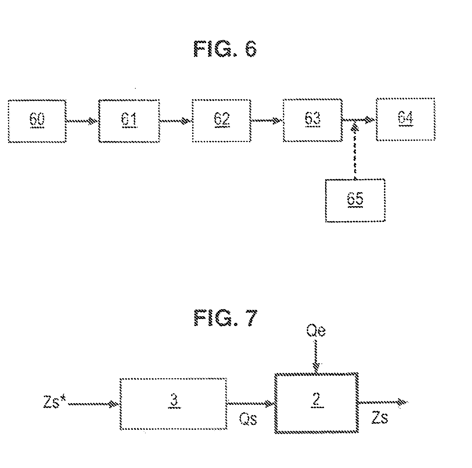

Comme le montre la figure 6, un procédé de régulation d'un niveau Zs d'eau dans l'aménagement 2 hydraulique, comporte les étapes consistant à :

- commander 60, grâce au dispositif 4 de commande, l'actionneur 3 de l'organe réglant 21 ou 20 de l'aménagement hydraulique, pour la régulation du niveau Zd'eau dans l'aménagement 2 ;
- réguler 61 le niveau dans l'aménagement 2, grâce à la boucle 5 de retour reliée au dispositif 4, la régulation comportant les étapes de

  - mesure 62 du niveau dans l'aménagement 2, grâce au capteur 6 de mesure appartenant à la boucle 5 ; et
  - comparaison 63, grâce au comparateur 7 appartenant au dispositif 4, entre une consigne $Z^*(t)$ de niveau et une mesure $Z(t)$ de niveau à réguler issue du capteur 6 ;

- calculer 64, grâce au correcteur auto-adaptatif 40 du dispositif 4 de commande, à chaque pas $T_e$ de temps d'échantillonnage, un signal u(t) de commande de l'actionneur 3 selon l'équation (1).

Le procédé peut également comporter une étape 65 de régulation indirecte d'un niveau Zr qui est distant de l'organe réglant 20 ou 21, en calculant, grâce au module de correction 91, à l'anticipation 90 et au correcteur auto-adaptatif 40, un signal de commande $u(t)$ selon l'équation (1), avec une consigne Zs* issue de la boucle 9 selon l'équation (2).

Comme on l'a dit, l'invention concerne également un produit programme d'ordinateur qui, une fois chargé sur un système adapté, permet la mise en oeuvre d'un procédé selon l'invention.

Classiquement, selon un premier mode manuel un opérateur peut entrer manuellement une valeur de consigne de niveau dans le correcteur auto-adaptatif 40, en situation d'urgence. Bien entendu, un second mode manuel est possible : il consiste à ouvrir toutes les boucles de régulation pour appliquer directement une valeur de commande en débit, comme le montre la figure 7.

L'acquisition des mesures est vérifiée à chaque pas de temps d'échantillonnage Te. Si l'état de la mesure est invalide, le dispositif conserve la dernière mesure acquise valide. Si l'invalidité perdure plus de n périodes d'échantillonnage, une alarme est émise au pupitre de commande et la régulation continue de fonctionner dans ce mode dégradé, avec la dernière mesure valide.

Dans les deux modes de réalisation du système de régulation (figures 4 et 5), lorsque le signal Qs sature à sa valeur minimale ou maximale, le dispositif de commande bloque l'évolution du signal de commande u, afin d'éviter un emballement de l'action intégrale du PI (mode « anti-windup » selon la terminologie anglo-saxonne généralement utilisée par l'homme du métier) incluse dans le dispositif.

Ce traitement particulier de blocage est également appliqué à ur lorsque la variable Zs* sature dans le schéma de régulation d'un niveau distant (voir fig. 5).

Ces situations peuvent se produire en régime normal de fonctionnement ou en régime exceptionnel de crue.

**Revendications**

1. Procédé de régulation d'un niveau (*Ze*, *Zr*, *Zs*) d'eau positionné en un point quelconque dans un aménagement (2) hydraulique, comportant les étapes consistait à :

   - commander, grâce à un dispositif (4) de commande, au moins un actionneur (3) d'un organe réglant (20, 21) de l'aménagement hydraulique, pour la régulation d'un niveau (*Ze, Zr, Zs*) d'eau dans l'aménagement (2) ;
   - réguler le niveau dans l'aménagement (2), grâce à une boucle (5) de retour reliée au dispositif (4), la régulation comportant les étapes de
   - mesure du niveau dans l'aménagement (2), grâce à au moins un capteur (6) de mesure appartenant à la boucle (5) ; et
   - comparaison, grâce à au moins un comparateur (7) appartenant au dispositif (4), entre une consigne ($Z^*(t)$) de niveau et une mesure ($Z(t)$) de niveau à réguler issue du capteur (6) ;

   **ledit procédé étant caractérisé en ce qu'il comporte une étape consistant à**

- calculer, grâce à un correcteur auto-adaptatif (40) du dispositif (4) de commande, à chaque pas $T_e$ de temps d'échantillonnage, un signal u(t) de commande de l'actionneur (3), tel que :

$$u(t + T_e) = \frac{1}{\alpha}\left(\frac{dZ^*}{dt} - F\right)(t) + PI(e) \quad (1)$$

avec :

$Z^*(t)$ la consigne de niveau ;
$F$ une variable, mise à jour à chaque pas de temps $T_e$, et représentant un modèle complet de l'aménagement (2) hydraulique ;
$\alpha$ est un coefficient constant tel que $F$ et $\alpha.u$ sont du même ordre de grandeur;

$$PI(e) = K_p.e + K_i.\int e.dt$$

avec $e = Z(t) - Z^*(t)$, avec $Z(t)$ la mesure du niveau à réguler au cours du temps, issue du capteur (6) et $Kp$ et $Ki$ des gains constants.

2. Procédé selon la revendication 1, comportant une étape d'estimation de la dérivée de la mesure de niveau à réguler par un filtrage, grâce à un filtre (41) du dispositif (4) relié au correcteur auto-adaptatif (40), de sorte que la correcteur auto-adaptatif (40) calcule la variable $F$, mise à jour à chaque pas de temps $T_e$, selon la formule :

$$F(t) = Est\left(\frac{dZ(t)}{dt}\right) - \alpha.u(t)$$

où

$$Est\left(\frac{dZ(t)}{dt}\right) = Filtre\left(\frac{Z(t) - Z(t - T_e)}{T_e}\right).$$

3. Procédé selon l'une des revendications 1 ou 2, comportant une étape de filtrage d'anticipation, grâce à un filtre (42) d'anticipation, par exemple au premier ordre, le filtre (42) prenant en compte un retard égal au temps de propagation estimé entre une mesure (Ze) de niveau d'entrée et une mesure (Zs) de niveau de sortie de l'aménagement.

4. Procédé selon l'une des revendications 1 à 3, comportant une étape de limitation, grâce à un limiteur (43), le limiteur (43) limitant le signal de commande de sorte que

- l'amplitude d'un débit Qs sortant de l'aménagement (2) entre deux bornes $Qsmin$ et $Qsmax$ soit telle que :

$$Qs\min \leq Qs \leq Qs\max$$

et/ou
- la vitesse de variation du débit Qs sortant à une vitesse $Vmax$ maximale soit telle que :

$$-V\max \leq \frac{dQs}{dt} \leq V\max.$$

**5.** Procédé selon l'une des revendications 1 à 4, comportant une étape de régulation indirecte d'un niveau (*Zr*) qui est distant de l'organe réglant (20, 21), en calculant, grâce au correcteur auto-adaptatif (40), un signal de commande *u*(*t*) pour la régulation d'un niveau proche (*Zs*) tel que :

$$u(t + T_e) = \frac{1}{\alpha}\left(\frac{dZs^*}{dt} - F\right)(t) + PI(e)$$

avec : *Zs*(*t*) un niveau proche à réguler au cours du temps pour réguler indirectement le niveau Zr(t) distant : *Zs*\*(*t*) la consigne de niveau calculée, issue d'une boucle (9) telle que

$$Zs^*(t) = Zf^* + PI(e_r)$$

avec $Z_f^\bullet = (Z_r^\bullet - c_e Z_e)/c$ où c et ce sont des facteurs de forme prenant en compte les positions respectives d'une part d'un niveau distant Zr à réguler et d'autre part d'une mesure Ze d'un niveau d'entrée dans l'aménagement ;

$$PI(e_r) = K_{pr}.e_r + K_{ir}.\int e_r.dt$$

où $e_r = Zr^*(t) - Zr(t)$ et
*Kpr* et *Kir* des gains constants.

**6.** Système (1) de régulation d'un niveau (Ze, Zr, Zs) d'eau dans un aménagement (2) hydraulique, comportant :

- au moins un capteur (6) de mesure de niveau dans l'aménagement (2) ;
- un dispositif (4) de commande d'au moins un actionneur (3) d'un organe (20, 21) réglant de l'aménagement (2), pour la régulation d'un niveau (Ze, Zr, Zs) d'eau dans l'aménagement (2) ;
- une boucle (5) de retour reliant le capteur (6) au dispositif (4),

le dispositif (4) comportant au moins un comparateur (7) entre une consigne de niveau (*Z*\*(*t*)) et une mesure (*Z*(*t*)) de niveau issue du capteur (6) :
ledit système étant **caractérisé en ce que**
le dispositif (4) de commande comporte un correcteur auto-adaptatif (40) qui calcule, à chaque pas $T_e$ de temps d'échantillonnage, un signal u(t) de commande de l'actionneur (3), tel que :

$$u(t + T_e) = \frac{1}{\alpha}\left(\frac{dZ^*}{dt} - F\right)(t) + PI(e)$$

avec : Z\*(t) la consigne de niveau ;
*F* une variable, mise à jour à chaque pas de temps $T_e$, et représentant un modèle complet de l'aménagement (2) hydraulique ;
$\alpha$ est un coefficient constant tel que F et $\alpha.u$ sont du même ordre de grandeur;

$$PI(e) = K_p.e + K_i.\int e.dt$$

avec $e = Z(t) - Z^*(t)$ avec $Z(t)$ la mesure du niveau à réguler au cours du temps, issue du capteur (6) et
*Kp* et *Ki* des gains constants.

**7.** Système selon la revendication 6, dans lequel la dispositif (4) comporte un filtre (41) relié au correcteur auto-adaptatif (40), de sorte que le correcteur auto-adaptatif (40) soit apte à calculer la variable F, mise à jour à chaque pas de

temps $T_e$, selon la formule :

$$F(t) = Est\left(\frac{dZ(t)}{dt}\right) - \alpha.u(t)$$

où

$$Est\left(\frac{dZ(t)}{dt}\right) = Filtre\left(\frac{Z(t) - Z(t - T_e)}{T_e}\right).$$

8. Système selon l'une des revendications 6 ou 7, comportant

   - un filtre (42) d'anticipation, par exemple au premier ordre, apte à prendre en compte un retard égal au temps de propagation estimé entre une mesure (Ze) de niveau d'entrée et une mesure (Zs) de niveau de sortie de l'aménagement ; et/ou
   - un limiteur (43) apte à limiter le signal de commande de sorte que

     l'amplitude d'un débit Qs sortant de l'aménagement (2) entre deux bornes *Qsmin* et *Qsmax* soit telle que :

$$Qs\min \leq Qs \leq Qs\max$$

   et/ou
   la vitesse de variation du débit Qs sortant à une vitesse *Vmax* maximale soit telle que :

$$-V\max \leq \frac{dQs}{dt} \leq V\max .$$

9. Système selon l'une des revendications 6 à 8, comportant une boucle (9) de retour reliée au dispositif (4) et comportant

   - un module (90) d'anticipation apte à calculer la variable $Zf^*$ telle que

$$Z_f^{\bullet} = \left(Z_r^{\bullet} - c_e.Z_e\right)/c$$

   où c et ce sont des facteurs de forme prenant en compte les positions respectives d'une part d'un niveau distant Zr à réguler et d'autre part d'une mesure Ze d'un niveau d'entrée dans l'aménagement ;
   - un module (91) de correction apte à corriger l'erreur er telle que

$$PI(e_r) = K_{pr}.e_r + K_{ir}.\int e_r.dt$$

   où $e_r = Zr^*(t) - Zr(t)$ et
   *Kpr* et *Kir* des gains constants ;
   de sorte que Zs* prise en compte par le correcteur auto-adaptatif (40) pour le calcul du signal de commande soit égale à

$$Zs*(t) = Zf* + PI(e_r).$$

**10.** Produit programme d'ordinateur, qui, une fois chargé sur un système selon l'une des revendications 6 à 9, permet la mise en oeuvre d'un procédé selon l'une des revendications 1 à 5.

**Claims**

**1.** Method of regulating a water level ($Ze$, $Zr$, $Zs$) positioned at any point in a hydraulic works (2), comprising the steps consisting of:

- controlling, by means of a control device (4), at least one actuator (3) of a regulating member (20, 21) of the hydraulic works for regulating a water level ($Ze$, $Zr$, $Zs$) in the works (2);
- regulating the level in the works (2), by means of a return loop (5) connected to the device (4), the regulation comprising the steps of
- measuring the level in the works (2), by means of at least one measuring sensor (6) forming part of the loop (5); and
- comparing, by means of at least one comparator (7) forming part of the device (4), between a set level value ($Z^*(t)$) and a measurement ($Z(t)$) of level to be regulated issuing from the sensor (6);

**said method being characterised in that it comprises a step consisting of**

- calculating, by means of an auto-adaptive corrector (40) of the control device (4), at each sampling time step $T_e$, a signal $u(t)$ controlling the actuator (3), such that:

$$u(t + T_e) = \frac{1}{\alpha}\left(\frac{dZ^{\bullet}}{dt} - F\right)(t) + PI(e) \qquad (1)$$

with:

$Z^*(t)$ the set level value;
$F$ a variable, updated at each time step $T_e$, and representing a complete model of the water works (2);
$\alpha$ is a constant coefficient such that $F$ and $\alpha.u$ are of the same order of magnitude;

$$PI(e) = K_p.e + K_i. + \int e.dt$$

with $e = Z(t) - Z^*(t)$, with $Z(t)$ the measurement of the level to be regulated over time, issuing from the sensor (6), and
$K_p$ and $K_i$ constant gains.

**2.** Method according to claim 1, comprising a step of estimating the derivative of the level measurement to be regulated by filtering, by means of a filter (41) of the device (4) connected to the auto-adaptive corrector (40), so that the auto-adaptive corrector (40) calculates the variable $F$, updated at each time step $T_e$, according to the formula:

$$F(t) = Est\left(\frac{dZ(t)}{dt}\right) - \alpha.u(t)$$

where $Est\left(\frac{dZt}{dt}\right) = Filter\left(\frac{Z(t) - Z(t - T_e)}{T_e}\right).$

**3.** Method according to one of claims 1 or 2, comprising a step of anticipation filtering, by means of an anticipation filter (42), for example first order, the filter (42) taking into account a delay equal to the estimated propagation time between an input level measurement (*Ze*) and an output level measurement (*Zs*) of the works.

**4.** Method according to one of claims 1 to 3, comprising a limitation step, by means of a limiter (43), the limiter (43) limiting the control signal so that

- the amplitude of a rate Qs leaving the works (2) between two bounds *Qsmin* and *Qsmax* is such that:

$$Qsmin \leq Qs \leq Qsmax$$

and/or
- the speed of variation of the rate *Qs* emerging at a maximum speed *Vmax* is such that:

$$-V\max \leq \frac{dQs}{dt} \leq V\max$$

**5.** Method according to one of claims 1 to 4, comprising a step of indirect regulation of a level (*Zr*) that is distant from the regulating member (20, 21), by calculating, by means of the auto-adaptive corrector (40), a control signal *u(t)* for regulating a close level (*Zs*) such that:

$$u(t + T_e) = \frac{1}{\alpha}\left(\frac{dZs^*}{dt} - F\right)(t) + PI(e)$$

with: *Zs(t)* a close level to be regulated over time in order to indirectly regulate the distant level *Zr(t)*:

*Zs\*(t)* the set level calculated, issuing from a loop (9) such that

$$Zs^*(t) = Zf^* + PI(e_r)$$

with $Z_f^* = (Z_r^* - c_e Z_e)/c$ where c and $c_e$ are form factors taking into account the respective positions firstly of a distant level *Zr* to be regulated and secondly a measurement *Ze* of an input level in the works:

$$PI(e_r) = K_{pr}.e_r + K_{ir}.\int e_r.dt$$

where $e_r = Zr^*(t) - Zr(t)$ and
$K_{pr}$ and $K_{ir}$ constant gains.

**6.** System (1) for regulating a water level (*Ze, Zr, Zs*) in a hydraulic works (2), comprising:

- at least one sensor (6) for measuring the level in the works (2);
- a device (4) for controlling at least one actuator (3) of a regulating member (20, 21) of the works (2), for regulating a level (*Ze, Zr, Zs*) of water in the works (2);
- a return loop (5) connecting the sensor (6) to the device (4),

the device (4) comprising at least one comparator (7) between a set level value (*Z\*(t)*) and a level measurement (*Z*(*t*)) issuing from the sensor (6);

said system being **characterised in that**

the control device (4) comprises an auto-adaptive corrector (40) that calculates, at each sampling time step $T_e$, a signal *u* (*t*) controlling the actuator (3), such that:

$$u(t+T_e) = \frac{1}{\alpha}\left(\frac{dZ^*}{dt} - F\right)(t) + PI(e)$$

with:

$Z^*$(*t*) the set level value;

*F* a variable, updated at each time step $T_e$, and representing a complete model of the hydraulic works (2) ;

$\alpha$ is a constant coefficient such that *F* and $\alpha$.u are of the same order of magnitude;

$$PI(e) = K_p.e + K_i.+ \int e.dt$$

with *e* = Z(*t*) - Z*(*t*), with *Z* (*t*) the measurement of the level to be regulated over time, issuing from the sensor (6), and

$K_p$ and $K_i$ constant gains.

7. System according to claim 6, in which the device (4) comprises a filter (41) connected to the auto-adaptive corrector (40), so that the auto-adaptive corrector (40) is able to calculate the variable F, updated at each time step $T_e$, according to the formula:

$$F(t) = Est\left(\frac{dZ(t)}{dt}\right) - \alpha.u(t)$$

where $Est\left(\frac{dZt}{dt}\right) = Filter\left(\frac{Z(t)-Z(t-T_e)}{T_e}\right).$

8. System according to one of claims 6 or 7, comprising

- an anticipation filter (42), for example first order, able to take into account a delay equal to the estimated propagation time between an input level measurement (*Ze*) and an output level measurement (*Zs*) of the works; and/or

- a limiter (43) able to limit the control signal so that

the amplitude of a rate Qs leaving the works (2) between two bounds *Qsmin* and *Qsmax* is such that:

$$Qsmin \leq Qs \leq Qsmax$$

and/or

the speed of variation of the rate Qs emerging at a maximum speed *Vmax* is such that:

$$-V\max \leq \frac{dQs}{dt} \leq V\max$$

9.  System according to one of claims 6 to 8, comprising a return loop (9) connected to the device (4) and comprising

    - an anticipation module (90) able to calculate the variable $Zf^*$ such that

$$Z_f^{\bullet} = (Z_r^{\bullet} - c_e Z_e)/c$$

where c and $c_e$ are form factors taking into account the respective positions firstly of a distant level Zr to be regulated and secondly a measurement Ze of an input level in the works;
- a correction module (91) able to correct the error er such that

$$PI(e_r) = K_{pr}.e_r + K_{ir}.\int e_r.dt$$

where $e_r = Zr^*(t) - Zr(t)$ and
$K_{pr}$ and $K_{ir}$ constant gains;
so that Zs* taken into account by the auto-adaptive corrector (40) for calculating the control signal is equal to

$$Zs^*(t) = Zf^{\bullet} + PI(e_r)$$

10. Computer program product which, once loaded onto a system according to one of claims 6 to 9, enables a method according to one of claims 1 to 5 to be implemented.

**Patentansprüche**

1.  Verfahren zur Regulierung eines Wasserstands (Ze, Zr, Zs), der sich an einem beliebigen Punkt einer wasserwirtschaftlichen Anlage (2) befindet, das die folgenden Schritte umfasst:

    - Betätigen wenigstens eines Stellglieds (3) eines Regulierungsorgans (20, 21) der wasserwirtschaftlichen Anlage mithilfe einer Steuervorrichtung (4) zur Regulierung eines Wasserstands (Ze, Zr, Zs) in der Anlage (2);
    - Regulieren des Wasserstands in der Anlage (2) mithilfe einer mit der Vorrichtung (4) verbundenen Rückführungsschleife (5), wobei die Regulierung die Schritte umfasst:

        - Messen des Wasserstands in der Anlage (2) mithilfe wenigstens eines der Schleife (5) zugehörigen Messsensors (6); und
        - Vergleichen eines Wasserstandssollwerts (Z*(t)) mit einer vom Sensor (6) stammenden Messung (Z(t)) des zu regulierenden Wasserstands mithilfe wenigstens eines der Vorrichtung (4) zugehörigen Komparators (7);

    wobei das Verfahren **dadurch gekennzeichnet ist, dass** es einen Schritt umfasst, der darin besteht

    - Berechnen eines Signals u(t) zur Steuerung des Stellglieds (3) mithilfe eines selbstanpassenden Reglers (40) der Steuervorrichtung (4) bei jedem Abtastzeitintervall $T_e$ gemäß:

$$u(t + T_e) = \frac{1}{\alpha}\left(\frac{dZ*}{dt} - F\right)(t) + PI(e) \qquad (1)$$

wobei:

Z*(t) der Wasserstandssollwert ist;
F eine Variable ist, die bei jedem Zeitintervall $T_e$ aktualisiert wird und ein vollständiges Modell der wasserwirtschaftlichen Anlage (2) darstellt;
$\alpha$ ein konstanter Koeffizient wie F ist und $\alpha$.u in der gleichen Größenordnung sind;
$PI(e) = Kp \cdot e + K_i . \int e \cdot dt$ ist,
wobei:

e = Z(t)-Z*(t) ist, wobei Z(t) die vom Sensor (6) stammende Messung des im Zeitverlauf zu regulierenden Wasserstands und
Kp und $K_i$ konstante Verstärkungen sind.

2. Verfahren nach Anspruch 1, mit einem Schritt zur Schätzung der Ableitung der Messung des zu regulierenden Wasserstands durch eine Filterung, mithilfe eines mit dem selbstanpassenden Regler (40) verbundenen Filters (41) der Vorrichtung (4), solchermaßen, dass der selbstanpassende Regler (40) die bei jedem Zeitintervall $T_e$ aktualisierte Variable F berechnet nach der Formel:

$$F(t) = Est\left(\frac{dZ(t)}{dt}\right) - \alpha.u(t)$$

mit $Est\left(\frac{dZ(t)}{dt}\right) = Filter\left(\frac{Z(t)-Z(t-T_e)}{T_e}\right).$

3. Verfahren nach einem der Ansprüche 1 oder 2, mit einem Schritt zur Antizipierungsfilterung mithilfe eines Antizipierungsfilters (42), zum Beispiel erster Ordnung, wobei der Filter (42) eine Verzögerung berücksichtigt, die der geschätzten Laufzeit zwischen einer Messung (Ze) des Zulaufniveaus und einer Messung (Zs) des Ablaufniveaus der Anlage entspricht.

4. Verfahren nach einem der Ansprüche 1 bis 3, mit einem Schritt zur Begrenzung mithilfe eines Begrenzers (43), wobei der Begrenzer (43) das Steuersignal solchermaßen begrenzt, dass:

- die Amplitude einer aus der Anlage (2) abgehenden Abflussmenge Qs zwischen zwei Begrenzungen Qsmin und Qsmax ist gleich:

$$Qsmin \leq Qs \leq Qsmax$$

und/oder
- die Geschwindigkeit der Schwankung der mit einer maximalen Geschwindigkeit Vmax abgehenden Abflussmenge Qs ist gleich:

$$-Vmax \leq \frac{dQs}{dt} \leq Vmax$$

5. Verfahren nach einem der Ansprüche 1 bis 4, mit einem Schritt zur indirekten Regulierung eines Wasserstands (Zr), der von dem Regulierungsorgan (20, 21) entfernt ist, durch Berechnung eines Steuersignals u(t) mithilfe des selbstanpassenden Reglers (40) zur Regulierung eines nahen Wasserstands (Zs) gemäß:

$$u(t + T_e) = \frac{1}{\alpha}\left(\frac{dZ*}{dt} - F\right)(t) + PI(e)$$

wobei:

Zs(t) ein im Zeitverlauf zu regulierender naher Wasserstand zur indirekdes entfernten Wasserstands Zr(t) ist;
Zs*(t) der aus einer Schleife (9) stammende berechnete Wasserstandssollwert gemäß

$$Zs^*(t) = Zf^*PI(e_r)$$

ist, mit $Z^*_f = (Z^*_r - C_e.Z_e)/c$, wobei c und $c_e$ Formfaktoren sind, die die jeweiligen Positionen einerseits eines zu regulierenden entfernten Wasserstands Zr und andererseits einer Messung Ze eines Zulaufniveaus in die Anlage berücksichtigen;

$$PI(e_r) = K_{pr} \cdot e_r + K_{ir} \cdot \int e_r \cdot dt$$

ist,
wobei:

$e_r = Zr^*(t) - Zr(t)$ und
$K_{pr}$ und $K_{ir}$ konstante Verstärkungen sind.

6. System (1) zur Regulierung eines Wasserstands (Ze, Zr, Zs) in einer wasserwirtschaftlichen Anlage (2), mit:

- wenigstens einem Sensor (6) zum Messen des Wasserstands in der Anlage (2);
- einer Vorrichtung (4) zur Steuerung wenigstens eines Stellglieds (3) eines Regulierungsorgans (20, 21) der Anlage (2) zur Regulierung eines Wasserstands (Ze, Zr, Zs) in der Anlage (2);
- einer Rückführungsschleife (5), die den Sensor (6) mit der Vorrichtung (4) verbindet,

wobei die Vorrichtung (4) wenigstens einen Komparator (7) zum Vergleich eines Wasserstandssollwerts (Z*(t)) mit einer vom Sensor (6) stammenden Wasserstandsmessung (Z(t)) aufweist;
wobei das System **dadurch gekennzeichnet ist, dass**
die Steuervorrichtung (4) einen selbstanpassenden Regler (40) aufweist, der bei jedem Abtastzeitintervall $T_e$ ein Signal u(t) zur Steuerung des Stellglieds (3) berechnet gemäß

$$u(t + T_e) = \frac{1}{\alpha}\left(\frac{dZ*}{dt} - F\right)(t) + PI(e)$$

wobei:

Z*(t) der Wasserstandssollwert ist;
F eine Variable ist, die bei jedem Zeitintervall $T_e$ aktualisiert wird und ein vollständiges Modell der wasserwirtschaftlichen Anlage (2) darstellt; $\alpha$ ein konstanter Koeffizient wie F ist und $\alpha$.u in der gleichen Größenordnung sind;

$$PI(e) = K_p \cdot e + K_i \cdot \int e \cdot dt \text{ ist,}$$

wobei:

e = Z(t)-Z*(t) ist, wobei Z(t) die vom Sensor (6) stammende Messung des im Zeitverlauf zu regulierenden

Wasserstands ist und

$K_p$ und $K_i$ konstante Verstärkungen sind.

**7.** System nach Anspruch 6,

bei dem die Vorrichtung (4) einen mit dem selbstanpassenden Regler (40) verbundenen Filter (41) aufweist, derart, dass der selbstanpassende Regler (40) die bei jedem Zeitintervall $T_e$ aktualisierte Variable F zu berechnen vermag nach der Formel:

$$F(t) = Est\left(\frac{dZ(t)}{dt}\right) - \alpha.u(t)$$

mit $Est\left(\frac{dZ(t)}{dt}\right) = Filter\left(\frac{Z(t)-Z(t-T_e)}{T_e}\right).$

**8.** System nach einem der Ansprüche 6 oder 7, mit

- einem Antizipierungsfilter (42), zum Beispiel erster Ordnung, der eine Verzögerung zu berücksichtigen vermag, die der geschätzten Laufzeit zwischen einer Wasserstandsmessung (Ze) am Zulauf und einer Wasserstandsmessung (Zs) am Auslauf der Anlage entspricht; und/oder
- einem Begrenzer (43), der das Steuersignal solchermaßen zu begrenzen vermag, dass:

  - die Amplitude einer aus der Anlage (2) abgehenden Abflussmenge Qs zwischen zwei Begrenzungen Qsmin und Qsmax ist gleich:

$$Qsmin \leq Qs \leq Qsmax$$

  und/oder
  - die Geschwindigkeit der Schwankung der mit einer maximalen Geschwindigkeit Vmax abgehenden Abflussmenge Qs ist gleich:

$$-Vmax \leq \frac{dQs}{dt} \leq Vmax$$

**9.** System nach einem der Ansprüche 6 bis 8, mit einer Rückführungsschleife (9), die mit der Vorrichtung (4) verbunden ist und die umfasst:

- ein Antizipationsmodul (90), das die Variable Zf* zu berechnen vermag gemäß

$$Z*_f=(Z*_r-c_e.Z_e)/c$$

wobei c und $c_e$ Formfaktoren sind, die die jeweiligen Positionen einerseits eines zu regulierenden entfernten Wasserstands Zr und andererseits einer Messung Ze eines Wasserstands am Zulauf der Anlage berücksichtigen;
- ein Korrekturmodul (91), das den Fehler er zu korrigieren vermag gemäß

$$PI(e_r) = K_{pr} \cdot e_r + K_{ir} \cdot \int e_r \cdot dt$$

wobei:

$e_r$=Zr*(t)-Zr(t) und
$K_{pr}$ und $K_{ir}$ konstante Verstärkungen sind,

solchermaßen, dass Zs*, der durch den selbstanpassenden Regler (40) zur Berechnung des Steuersignals berücksichtigt wurde, gleich

$$Zs^*(t) = \overline{Zf}^* \overline{PI}(e_r).$$

ist.

10. Computerprogrammprodukt, dass nach Laden in ein System nach einem der Ansprüche 6 bis 9 die Durchführung eines Verfahrens nach einem der Ansprüche 1 bis 5 erlaubt.

## FIG. 1

## FIG. 2

## FIG. 3

EP 2 196 886 B1

## FIG. 4a

## FIG. 4b

FIG. 4c

Consigne Zs* — 7 — e — 40 — u — 43 — 31 3 — Qs — 21 — 2 — Zs
4 — 1 — Qe — 6

FIG. 4d

Consigne Zs* — 7 — e — 40 — u — 43 — 42 — Qe — 31 3 — Qs — 21 — 2 — Zs
4 — 1 — Qe — 6

EP 2 196 886 B1

EP 2 196 886 B1

FIG. 5a

FIG. 5b

24

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2187573 A
- WO 02071153 A
- US 4332507 A

**Littérature non-brevet citée dans la description**

- **BURT C M et al.** Improved Proportional-Integral (PI) logic for canal automation. *Journal of irrigation and drainage engineering,* 01 Janvier 1998, vol. 124, 53-57
- **ZHUAN X et al.** Models and control methodologies in open water flow dynamics : a survey. *Africon 2007,* 01 Septembre 2007, 1-7